(19) Europäisches Patentamt
European Patent Office
Office européen des brevets

(11) EP 3 181 804 A1

(12) DEMANDE DE BREVET EUROPEEN

(43) Date de publication:
21.06.2017 Bulletin 2017/25

(51) Int Cl.:
E21B 43/00 (2006.01)      G01V 11/00 (2006.01)
E21B 41/00 (2006.01)

(21) Numéro de dépôt: 16306491.8

(22) Date de dépôt: 15.11.2016

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
MA MD

(30) Priorité: 17.12.2015 FR 1562615

(71) Demandeur: IFP Énergies nouvelles
92852 Rueil-Malmaison (FR)

(72) Inventeurs:
• JERBI, Chahir
92000 NANTERRE (FR)
• FOURNO, Andre
92500 RUEIL-MALMAISON (FR)
• NOETINGER, Benoit
75009 PARIS (FR)

(54) **PROCEDE POUR CARACTERISER ET EXPLOITER UNE FORMATION SOUTERRAINE COMPRENANT UN RESEAU DE FRACTURES**

(57) - Procédé pour l'exploitation d'un fluide au sein d'une formation souterraine comprenant un réseau de fractures.

- A partir de mesures de propriétés relatives à la formation, d'une représentation maillée de la formation, et de paramètres statistiques relatifs au réseau de fractures, on décompose chaque maille de la représentation maillée en au moins un bloc matriciel non fracturé et on détermine un tenseur de perméabilité équivalente du réseau de fractures dans la maille considérée. Puis, on détermine une dimension caractéristique de bloc matriciel selon une relation fonction au moins des valeurs propres du tenseur de perméabilité équivalente. A partir de la représentation maillée, de la dimension caractéristique et d'un simulateur d'écoulement, on définit un schéma d'exploitation optimal du fluide de la formation et on exploite ledit fluide en fonction du schéma d'exploitation optimal.

- Application notamment à l'exploration et à l'exploitation pétrolière.

Fig. 4

**Description**

La présente invention concerne le domaine de l'industrie pétrolière, et plus particulièrement l'exploration et l'exploitation de gisements d'hydrocarbures ou de sites de stockage géologique de gaz.

En particulier, l'invention concerne un procédé pour construire une représentation d'une formation souterraine traversée par un réseau de fractures quelconque, et l'utilisation de cette représentation pour la simulation des écoulements de fluide dans la formation considérée.

L'industrie pétrolière, et plus précisément l'exploration et l'exploitation de gisements, notamment pétroliers, nécessitent d'acquérir une connaissance aussi précise que possible de la géologie souterraine, et ce, afin de fournir de façon efficace une évaluation des réserves, une modélisation de la production, ou de la gestion de l'exploitation. En effet, la détermination de l'emplacement d'un puits de production ou d'un puits d'injection au sein d'un gisement d'hydrocarbures, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. La connaissance d'un gisement signifie disposer d'une description aussi précise que possible de la structure, des propriétés pétrophysiques, des propriétés des fluides, etc, du gisement étudié.

Pour acquérir cette connaissance, l'industrie pétrolière allie les mesures sur champ (réalisées in situ, lors de campagnes sismiques, de mesures dans des puits, de carottages etc) aux modélisations expérimentales (réalisées au laboratoire) ainsi qu'aux simulations numériques (réalisées au moyen de logiciels).

La formalisation de cette connaissance passe ensuite par l'établissement d'une maquette du sous-sol, connue sous le terme de « modèle géologique », qui permet de rendre compte de ces aspects de façon approchée. Généralement, ce type de maquette est représenté sur un ordinateur, et l'on parle alors de modèle numérique. Un modèle de réservoir comporte une représentation maillée (sous la forme d'une grille régulière, ou sous la forme d'un maillage de façon plus générale), généralement tridimensionnelle, au moins une propriété pétrophysique (porosité, perméabilité, saturation...) étant attribuée à chacune des mailles de la représentation maillée.

Afin de reproduire ou prédire (i.e. "simuler") la production d'hydrocarbures réelle, le spécialiste en ingénierie de réservoir met en oeuvre un logiciel de calcul, appelé « simulateur de réservoir ». Le simulateur de réservoir est un simulateur d'écoulement, qui calcule les écoulements et l'évolution des pressions au sein du réservoir représenté par un « modèle de réservoir ». Si la puissance informatique disponible pour réaliser les simulations d'écoulement le permet, le modèle de réservoir peut se confondre avec le modèle géologique. Dans le cas contraire, le modèle de réservoir peut être obtenu à l'issue d'une technique d'« upscaling » (mise à l'échelle), qui permet de passer du modèle géologique (modèle aux mailles plus fines) au modèle réservoir (modèle aux mailles plus grossières). Cette étape d'upscaling est bien connue du spécialiste en ingénierie de réservoir et peut être réalisée par exemple à l'aide du logiciel CobraFlow (IFP Energies nouvelles, France).

Les résultats de ces calculs permettent alors de prévoir et d'optimiser des schémas d'exploitation (définition du nombre de puits à implanter, de leur position, du mode de récupération assistée, etc.) du gisement étudié afin d'améliorer les débits et/ou les quantités d'hydrocarbures récupérés. Le calcul du comportement du réservoir suivant un scénario de production donné constitue une simulation de réservoir.

Les documents suivants seront cités au cours de la description :

Bourbiaux, B., Cacas, M. C., Sarda, S. and Sabathier J. C., 1998, "A Rapid and Efficient Methodology to Convert Fractured Reservoir Images into a Dual-Porosity Model", Oil & Gas Science and Technology, Vol. 53, No. 6, Nov.-Déc. 1998, 785-799.

Oda, M., 1985, Permeability tensor for discontinuous Rock Masses, Geotechnique Vol 35, Issue 4, 483-495.

Warren, J.E. et Root, P.J., "The Behavior of Naturally Fractured Reservoirs", SPE Journal (septembre 1963), 245-255.

Les réservoirs fracturés constituent un type extrême de réservoirs géologiques hétérogènes, comportant deux milieux contrastés: un milieu matriciel contenant la plus grande part de l'huile en place et présentant une faible perméabilité, et un milieu fracturé représentant moins de 1 % de l'huile en place et hautement conducteur. Le milieu fracturé lui-même peut être complexe, composé de différentes familles de fractures caractérisées par leur densité, et des distributions portant sur la longueur des fractures de chaque famille, leur orientation dans l'espace et leur ouverture. On appelle « fracture », une discontinuité plane, de très faible épaisseur par rapport à son extension, et qui représente un plan de rupture d'une roche du gisement.

Les spécialistes en charge de l'exploitation de réservoirs fracturés, ont besoin de parfaitement connaître le rôle des fractures. D'une part, la connaissance de la distribution et du comportement de ces fractures permet d'optimiser les schémas de production d'un gisement d'hydrocarbures, c'est-à-dire le nombre de puits à forer, leur localisation, leur géométrie, le type de fluide de récupération injecté etc. D'autre part, la géométrie du réseau de fractures conditionne le déplacement des fluides, tant à l'échelle du réservoir qu'à l'échelle locale, où elle détermine des blocs matriciels élémentaires dans lesquels l'huile est piégée. Connaître la distribution des fractures est également très utile pour l'ingénieur de réservoir qui cherche à calibrer les modèles qu'il construit, de sorte à ce que les modèles construits reproduisent les courbes de production passées, et ce, afin de prédire les productions futures de façon fiable. A ces fins, les spécialistes de géosciences disposent d'images tridimensionnelles des gisements, permettant de localiser un grand nombre de fractures.

Confronté à la complexité des milieux fracturés, les spécialistes utilisent bien souvent une approche de type « double milieu » pour représenter ce type de milieu. Décrite par exemple dans (Warren et Root, 1963), cette approche suppose que tout volume élémentaire (maille du modèle de réservoir) du réservoir fracturé est modélisé sous la forme d'un ensemble de blocs parallélépipédiques identiques, appelés blocs matriciels, délimités par un système orthogonal de fractures uniformes continues orientées suivant les directions principales d'écoulement. L'écoulement des fluides, à l'échelle du réservoir, s'effectue à travers les fractures pour l'essentiel, et des échanges de fluides interviennent localement entre les fractures et les blocs matriciels. Le plus souvent, les mailles ont des dimensions latérales hectométriques (couramment 100 ou 200 m) compte tenu de la taille des champs et des possibilités limitées des logiciels de simulation en termes de capacité et temps de calcul. Il en résulte que, pour la plupart des champs fracturés, le volume élémentaire (maille) de réservoir fracturé renferme d'innombrables fractures formant un réseau complexe délimitant de multiples blocs matriciels de dimensions et formes variables suivant le contexte géologique. Chacun des blocs réels constitutifs échange des fluides avec les fractures qui l'entourent à un rythme (débit) qui lui est propre car dépendant des dimensions et de la forme de ce bloc particulier.

Face à une telle complexité géométrique du milieu réel, la démarche du spécialiste en ingénierie de réservoir consiste, pour chaque volume élémentaire (maille) de réservoir, à représenter le milieu fracturé réel comme un ensemble de blocs matriciels tous identiques, parallélépipédiques, délimités par un réseau orthogonal et régulier de fractures orientées suivant les directions principales d'écoulement : pour chaque maille, on détermine ainsi les perméabilités dites "équivalentes" de ce réseau de fractures et on définit un bloc matriciel, dit « représentatif » (de la distribution réelle (géologique) des blocs), unique et de forme parallélépipédique. Il est alors possible de formuler et calculer les flux d'échange matrice-fissure pour ce bloc "représentatif", et d'en multiplier le résultat par le nombre de tels blocs dans le volume élémentaire (maille) pour obtenir le flux à l'échelle de cette maille.

Une des étapes de l'approche double milieu consiste donc à déterminer la dimension caractéristique des blocs matriciels représentatifs pour chaque maille du modèle de réservoir. Cette détermination doit être la plus précise possible afin de rendre compte au mieux des écoulements dans le réservoir. Mais cette étape doit aussi être réalisée en des temps de calculs raisonnables, afin de rendre l'approche double milieu applicable en routine, même pour des formations souterraines présentant des réseaux de fractures complexes.

**Etat de la technique**

On connait les demandes de brevet FR 2757957 (US 6064944) et FR 2923930 (US 8688424) qui décrivent un procédé permettant de calculer la dimension caractéristique d'un bloc matriciel, représentatif des blocs de roche non fracturés, à partir d'un modèle de réseau de fractures discret, d'une analyse d'image et de l'interpolation d'une courbe d'invasion. Ce procédé est mis en oeuvre couche par couche, et nécessite notamment une analyse d'image (pixellisation) pour chaque couche de la formation souterraine étudiée. La taille de blocs dans le plan de chaque couche est alors assez bien caractérisée mais celle dans un plan perpendiculaire aux couches (souvent un plan sub-vertical) n'est pas accessible. Ainsi cette approche est une approche 2D, ce qui ne permet pas de correctement représenter la réalité des milieux fracturés. De plus, ce procédé nécessite pour chaque couche une analyse d'image (pixellisation), et est donc relativement onéreux. Par la suite, ce procédé sera appelé méthode de pixellisation.

On connaît également une méthode de calcul de taille de bloc matriciel, appelée méthode par tirage de rayons. Cette méthode consiste, à partir d'un modèle de réseau de fractures discret, à tirer des segments de droite dans une maille, et à compter le nombre d'intersections de ce segment de droite avec les fractures du réseau de fractures discret. Une dimension caractéristique de bloc matriciel approximative est alors égale à la longueur du segment rapportée au nombre d'intersections déterminé. Le défaut majeur de cette méthode est de ne pas prendre en compte la connectivité du réseau de fractures. Par exemple, pour une même densité de rayons, un réseau connecté pourra avoir une taille de bloc identique à celle d'un réseau peu connecté, alors que l'écoulement dans ces deux réseaux est de fait différent. Le second défaut est de fournir un résultat fonction de la position et de la densité des rayons tirés. Ainsi, par exemple dans le cas d'un réseau de fractures peu dense, deux applications de cette méthode, avec deux tirages de rayons différents, peuvent aboutir à des résultats différents. Cette méthode, toutefois efficace en temps de calcul, est par exemple implémentée dans le logiciel FracaFlow (IFP Energies nouvelles, France).

Un des objets de la présente invention concerne un procédé pour exploiter une formation souterraine, au moyen d'une méthode de détermination de la dimension caractéristique d'un bloc matriciel représentatif des blocs de roche non fracturés pour au moins une maille du modèle de réservoir et ce, à partir du calcul d'un tenseur de perméabilité équivalente du réseau de fractures, et sans nécessairement recourir à un modèle de réseau de fractures discret. Le procédé selon l'invention est, en outre, tridimensionnel et peu onéreux en temps de calcul.

**Le procédé selon l'invention**

Ainsi, la présente invention concerne un procédé pour l'exploitation d'un fluide au sein d'une formation souterraine traversée par un réseau de fractures, dans lequel, à partir de mesures de propriétés relatives à ladite formation, on construit une représentation maillée de ladite formation et on détermine des paramètres statistiques relatifs audit réseau de fractures. Le procédé comporte au moins les étapes suivantes pour au moins une maille de ladite représentation maillée :

A. on décompose ladite maille en au moins un bloc matriciel, le dit bloc matriciel représentant une portion de ladite formation non fracturée, ledit bloc étant délimité par des fractures dudit réseau de fractures présentes dans ladite maille ;
B. on détermine un tenseur de perméabilité équivalente du réseau de fractures dans ladite maille ;
C. on détermine les directions principales d'écoulement et les valeurs propres dudit tenseur de perméabilité équivalente selon lesdites directions ;
D. on détermine une dimension caractéristique dudit bloc matriciel selon une relation fonction au moins desdites valeurs propres dudit tenseur de perméabilité ; et,

à partir d'au moins ladite représentation maillée, de ladite dimension caractéristique dudit bloc matriciel et d'un simulateur d'écoulement, on définit un schéma d'exploitation optimal dudit fluide de ladite formation et on exploite ledit fluide de ladite formation en fonction dudit schéma d'exploitation optimal.
Selon un mode de réalisation de la présente invention, lesdits paramètres statistiques peuvent être choisis parmi les paramètres suivants : densité de fractures, longueur de fractures, orientation des fractures dans l'espace, ouverture de fractures, et distribution de fractures au sein de ladite formation.
Avantageusement, on peut déterminer ledit tenseur de perméabilité équivalente pour ladite maille en construisant préalablement un modèle de de réseau de fractures discret pour ladite maille.
Selon un mode de réalisation de la présente invention, ladite dimension caractéristique dudit bloc matriciel de ladite maille peut être déterminée selon une formule de la forme :

$$t^i = \left( \frac{2 k_f e_f}{\sum_{j=1}^{3}(-1)^{\delta_{ij}} K_j} \right) \ ,$$

où $K_j$ est ladite valeur propre dudit tenseur de perméabilité équivalente selon ladite direction principale j, avec j variant de 1 à 3, $k_f$ et $e_f$ sont respectivement des valeurs prédéterminées de perméabilité et d'épaisseur représentatives de l'ensemble des fractures dudit réseau de fractures, et $t^i$ est ladite dimension caractéristique dudit bloc matriciel dans ladite direction principale d'écoulement i, i pouvant varier de 1 à 3.
Selon un mode de mise en oeuvre de la présente invention, ladite dimension caractéristique dudit bloc matriciel de ladite maille peut être déterminée selon une formule de la forme :

$$t^i = \left( \frac{2 k_f}{\sum_{j=1}^{3}(-1)^{\delta_{ij}} K_j} - 1 \right) e_f \ ,$$

où $K_j$ est ladite valeur propre dudit tenseur de perméabilité équivalente selon ladite direction principale j, avec j variant de 1 à 3, $k_f$ et $e_f$ sont respectivement des valeurs prédéterminées de perméabilité et d'épaisseur représentatives de l'ensemble des fractures dudit réseau de fractures, et $t^i$ est ladite dimension caractéristique dudit bloc matriciel dans ladite direction principale d'écoulement i, i pouvant varier de 1 à 3.
Selon un autre mode de mise en oeuvre de la présente invention, ladite dimension caractéristique dudit bloc matriciel de ladite maille peut être déterminée selon une relation fonction d'au moins lesdites valeurs propres dudit tenseur de perméabilité équivalente et d'un tenseur de perméabilité surfacique équivalente, ledit tenseur de perméabilité surfacique équivalente étant déterminé selon au moins les étapes suivantes :

- on réoriente ladite maille selon lesdites directions principales d'écoulement ;
- pour chaque direction principale d'écoulement, on détermine le flux dudit fluide sortant des traces de fractures présentes sur les faces de ladite maille réorientée perpendiculaires à ladite direction principale ;
- pour chaque direction principale d'écoulement, on détermine ladite perméabilité surfacique équivalente dans ladite direction par équivalence dudit flux avec un flux représentatif d'un milieu homogène.

Avantageusement, on peut déterminer en outre un critère d'acceptabilité de la représentation de ladite maille par une pluralité de blocs matriciels de même dimension caractéristique.

Préférentiellement, ladite maille, pour laquelle on réalise les étapes A) à D), peut être une maille représentative d'un groupe de mailles de ladite représentation maillée, ledit groupe de mailles étant déterminé par exemple à partir d'au moins ledit paramètre statistique, et dans lequel, à l'étape D), on peut attribuer ladite dimension caractéristique auxdits blocs matriciels desdites mailles dudit groupe.

Selon un mode de mise en oeuvre de l'invention, ledit schéma d'exploitation optimal peut être défini en déterminant un procédé de récupération dudit fluide, ainsi qu'un nombre, une implantation et une géométrie de puits injecteurs et/ou producteurs permettant de satisfaire des critères technico-économiques prédéfinis.

Avantageusement, ladite exploitation dudit fluide en fonction dudit schéma d'exploitation optimal peut consister au moins à forer lesdits puits injecteurs et/ou producteurs et à produire ledit fluide selon ledit procédé de récupération.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon la description ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

## Présentation succincte des figures

- La figure 1 présente un exemple de réseau de fractures selon une section horizontale réalisée dans une formation souterraine.

- La figure 2 illustre un exemple de réseau discret de fractures visibles à l'échelle de la maille tridimensionnelle dont les limites 2D sont présentées par le carré en figure 1.

- La figure 3 présente, à gauche, une maille d'une représentation maillée, réorientée selon les directions principales d'écoulement ; et à droite et en grisé, les faces de ladite maille réorientée, perpendiculaires à l'une des directions d'écoulement.

- La figure 4 présente un exemple de réseau de fractures selon une vue de dessus tridimensionnelle.

## Description détaillée du procédé

Le procédé selon l'invention concerne l'exploitation d'un fluide au sein d'une formation souterraine traversée par un réseau de fractures. De façon non limitative, la formation souterraine est constituée d'au moins une couche de roche réservoir (c'est-à-dire d'une roche au moins poreuse et préférentiellement perméable). L'exploitation du fluide présent dans au moins la couche de roche réservoir vise à extraire le fluide de cette roche réservoir. Non limitativement, le fluide en question est de type hydrocarbures (huile, gaz, bitume etc). Non limitativement, la formation souterraine peut être constituée de plusieurs couches géologiques, chaque couche géologique pouvant comprendre un réseau de fractures propre, et chaque réseau pouvant être constitué de plusieurs familles de fractures.

Selon l'invention, la formation souterraine est représentée par une représentation maillée, chacune des mailles de cette représentation comportant une ou plusieurs valeurs de propriétés relatives à la formation étudiée. Selon l'invention, on a recours à une approche double milieu pour représenter le milieu fracturé présent dans une maille, approche consistant à décomposer chaque maille en blocs matriciels identiques, parallélépipédiques, délimités par un réseau orthogonal et régulier de fractures orientées suivant des directions principales d'écoulement.

Le procédé selon la présente invention est basé sur une méthode pour déterminer la dimension caractéristique de bloc matriciel pour au moins une maille de la représentation maillée représentative de la formation étudiée.

La présente invention requiert de disposer :

- de mesures de propriétés relatives à la formation étudiée : il peut s'agir de mesures de propriétés pétrophysiques réalisées in situ, en différents points de la formation étudiée, telles que la porosité, la perméabilité, et la lithologie (c'est-à-dire le type de roche), la perméabilité relative ou encore la pression capillaire. Ces mesures peuvent avoir été obtenues par exemple par carottage, via des diagraphies réalisées dans des puits, par des campagnes d'acquisition sismique. Mais il peut s'agir aussi de mesures (débits d'huile, débits d'eau, variations de pression par exemple) liées aux écoulements dans la couche étudiée, obtenues par exemple par des mises en production du fluide en certains puits traversant la formation, au cours de tests de puits ou encore de tests d'interférence. Ces propriétés peuvent notamment être utilisées pour construire une représentation maillée de la formation étudiée. Afin de caractériser au mieux le réseau de fractures présent dans ladite formation, il peut aussi s'agir de mesures concernant l'orientation, le pendage ou encore l'extension des fractures présentes dans la formation étudiée, ces informations étant déterminées par exemple à partir de mesures diagraphiques ou sur des affleurements.

- d'une représentation maillée représentative de la formation étudié : appelée aussi « modèle de réservoir », il s'agit d'une sorte de maquette du sous-sol construite dans le but de décrire aussi précisément que possible la structure, les propriétés pétrophysiques de la formation étudiée, ou encore les propriétés des fluides présents dans la formation. Cette maquette est généralement représentée sur un ordinateur, et consiste en un maillage ou grille, chacune des mailles de cette grille comportant une ou plusieurs valeurs de propriétés relatives à la formation étudiée (porosité, perméabilité, saturation, etc). Un modèle de réservoir se doit de vérifier autant que possible les propriétés relatives à la formation étudiée collectées sur le terrain : les données de diagraphie mesurées le long des puits, les mesures réalisées sur des échantillons de roche prélevés dans les puits, les données déduites de campagnes d'acquisition sismique, les données de production comme les débits d'huile, d'eau, les variations de pression etc. Le spécialiste en simulation de réservoir a pleine connaissance de méthodes pour construire une telle représentation maillée d'une formation. A noter que le modèle de réservoir peut se confondre avec le modèle géologique lorsque la puissance informatique est suffisante pour permettre des calculs numériques de simulation d'écoulement sur une grille à mailles fines. Dans les autres cas, le spécialiste pourra avoir recours à une technique d' « upscaling » (mise à l'échelle) afin de passer d'un modèle aux mailles fines (le modèle géologique) à un modèle aux mailles plus grossières (le modèle de réservoir). Cette étape d'upscaling peut être réalisée par exemple à l'aide du logiciel CobraFlow (IFP Energies nouvelles, France).

- d'un simulateur d'écoulement : un simulateur d'écoulement est un programme numérique, exécuté sur un ordinateur, qui est utilisé pour prédire l'écoulement de fluides au sein d'une formation. La simulation d'écoulement, dite aussi simulation de réservoir, consiste à prédire numériquement la production d'un fluide piégé dans une ou plusieurs couches d'une formation souterraine, la production nécessitant l'existence d'au moins un puits injecteur (dans lequel on injecte un autre fluide, qui va chasser le fluide piégé) et d'un puits producteur (vers lequel le fluide piégé, chassé va se déplacer et duquel il va pouvoir être extrait). Avantageusement, on aura recours à un simulateur d'écoulement dit « double milieu », qui permet de modéliser les échanges entre les blocs de roches non fracturés (blocs matriciels) et le réseau de fractures, sans nécessiter la discrétisation de ces blocs. Un exemple d'un tel simulateur est le logiciel PUMAFLOW (IFP Energies nouvelles, France).

Le procédé selon l'invention comporte au moins les étapes suivantes :

**1. Caractérisation du réseau de fractures**

    **1.1. Détermination de paramètres statistiques**

    **1.2. Détermination de mailles représentatives (optionnelle)**

    **1.3. Construction d'un modèle de réseau de fractures discret (optionnelle)**

**2. Caractérisation d'une représentation double milieu**

    **2.1. Décomposition selon une représentation double milieu**

    **2.2. Détermination d'un tenseur de perméabilité équivalente**

    **2.3. Diagonalisation du tenseur de perméabilité équivalente**

    **2.4. Détermination de la dimension caractéristique de bloc matriciel**

### 2.5. Contrôle qualité (optionnelle)

### 3. Schéma d'exploitation optimal du fluide de la formation

L'étape 1 peut comprendre une, deux, ou trois étapes, les sous-étapes 1.2 et 1.3 étant optionnelles. La sous-étape 1.1 est à effectuer globalement, pour la formation étudiée. La sous-étape 1.2, optionnelle, consiste à déterminer, par exemple à partir des paramètres statistiques déterminés en 1.1, au moins une maille représentative d'un groupe de mailles de la représentation maillée. La sous-étape 1.3, optionnelle, consiste à déterminer un modèle de réseau de fractures discret. Cette sous-étape peut être effectuée pour une maille de la représentation maillée ou pour une maille représentative d'un groupe de mailles de la représentation maillée le cas échéant (cf. étape 1.2 optionnelle) ; elle peut être répétée pour chacune des mailles de la représentation maillée ou pour chacune des mailles représentatives de groupes de mailles de la représentation maillée le cas échéant (cf. étape 1.2 optionnelle). Déterminer puis considérer une maille représentative d'un groupe de mailles pour des calculs ultérieurs peut être avantageux en termes de temps de calculs. En effet, on peut par exemple effectuer des calculs requis à une étape ou sous-étape uniquement pour la maille représentative considérée, et ensuite attribuer le résultat de ces calculs à chacune des mailles dudit groupe de mailles, générant ainsi un gain en temps de calcul.

L'étape 2 est basée sur l'utilisation d'une représentation double milieu de la formation et est découpée en au moins quatre sous-étapes 2.1 à 2.4, l'étape 2.5 étant optionnelle. Ces quatre sous-étapes (et éventuellement cinq) sont à effectuer pour une maille de la représentation maillée ou pour une maille représentative d'un groupe de mailles de la représentation maillée le cas échéant (cf. étape 1.2 optionnelle). Elles peuvent être répétées pour chacune des mailles de la représentation maillée ou pour chacune des mailles représentatives de groupes de mailles de la représentation maillée le cas échéant (cf. étape 1.2 optionnelle).

Les principales étapes de la présente invention sont détaillées ci-après. Les sous étapes 1.3, et 2.1 à 2.4 sont déclinées pour une maille donnée, qui peut être une maille représentative ou non.

### 1. Caractérisation du réseau de fractures

Au cours de cette étape, il s'agit caractériser le réseau de fractures à partir des mesures de propriétés relatives à la formation réalisées in situ.

### 1.1. Détermination de paramètres statistiques

Au cours de cette sous-étape, il s'agit de déterminer des paramètres statistiques (connus sous l'acronyme PSF) tels que l'orientation des fractures ou la densité de fractures, permettant de caractériser le réseau de fractures de la couche étudiée. Cette sous-étape requiert des mesures, permettant une caractérisation directe ou indirecte de la fracturation. Des informations sur la fracturation d'une couche géologique peuvent être obtenues via des :

- carottes, extraites de la formation étudiée, et à partir desquelles une étude statistique des fractures intersectées peut être effectuée ; et/ou

- affleurements, qui présentent l'avantage de fournir une vision à grande échelle du réseau de fractures ; et/ou

- images sismiques, permettant d'identifier de grands événements géologiques et la géométrie des différentes structures de la formation.

Préférentiellement, on détermine une pluralité de paramètres statistiques de fractures afin de caractériser au mieux la fracturation présente au sein de la formation, lesdits paramètres pouvant être choisis parmi la densité des fractures observées, leur longueur, leur orientation dans l'espace, leur ouverture, leur perméabilité et leur distribution au sein de la couche étudiée.

On dispose ainsi de paramètres statistiques décrivant le réseau de fractures de la formation étudiée. Ces paramètres peuvent être utilisés pour déterminer des mailles représentatives de la représentation maillée (cf. sous-étape 1.2 optionnelle) et/ou un modèle de réseau de fractures discret (cf. sous-étape 1.3 optionnelle), à l'échelle d'une maille de la représentation maillée ou bien d'une maille représentative de la représentation maillée.

### 1.2. Détermination de mailles représentatives (optionnelle)

Cette sous-étape est facultative et consiste à déterminer au moins une maille représentative d'un groupe de mailles de la représentation maillée.

Selon un mode de mise en oeuvre de l'invention, on constitue un groupe de mailles de la représentation maillée selon un critère basé sur les caractéristiques du réseau de fractures présent dans lesdites mailles, par exemple par une mesure de semblance. Ainsi, les mailles regroupées en un groupe de mailles ont des caractéristiques similaires en termes de fracturation. Cette analyse de la ressemblance peut être effectuée non limitativement à partir des paramètres statistiques décrivant le réseau de fractures, ces paramètres étant déterminés à la sous-étape 1.1.

Selon un mode de mise en oeuvre de l'invention, on attribue une maille représentative au groupe de mailles de la représentation maillée ainsi constitué. Non limitativement, on peut attribuer audit groupe de mailles une maille quelconque dudit groupe de mailles, ou bien une maille dont les caractéristiques (orientation des fractures par exemple) se rapprochent de la moyenne des caractéristiques du groupe de mailles en question.

Selon un mode de réalisation de la présente invention, à l'issue de cette étape, une pluralité de groupes de mailles ont été constitués, de sorte à ce que toute maille de la représentation maillée ait été attribuée à un groupe de mailles, et chaque groupe de mailles étant associé à une maille représentative.

On peut avoir avantage à considérer une maille représentative d'un groupe de mailles en vue d'un gain en temps de calculs. En effet, on peut par exemple effectuer des calculs requis à une étape ou sous-étape pour la maille représentative considérée, et ensuite attribuer le résultat de ces calculs à chacune des mailles dudit groupe de mailles, générant ainsi un gain en temps de calcul.

**1.3. Construction d'un modèle de réseau de fractures discret (optionnelle)**

Cette sous-étape est facultative et consiste à construire une image réaliste du réseau de fractures caractérisé par les paramètres statistiques (PSF) déterminés à la sous-étape 1.1, en passant par un modèle de réseau de fractures discret (connu sous l'acronyme DFN, pour « Discrete Fracture Network » en anglais).

Cette sous-étape peut être effectuée pour une maille de la représentation maillée ou pour une maille représentative d'un groupe de mailles de la représentation maillée le cas échéant (cf. étape 1.2 optionnelle), et peut être répétée pour chacune des mailles de la représentation maillée ou pour chacune des mailles représentatives de groupes de mailles de la représentation maillée le cas échéant (cf. étape 1.2 optionnelle).

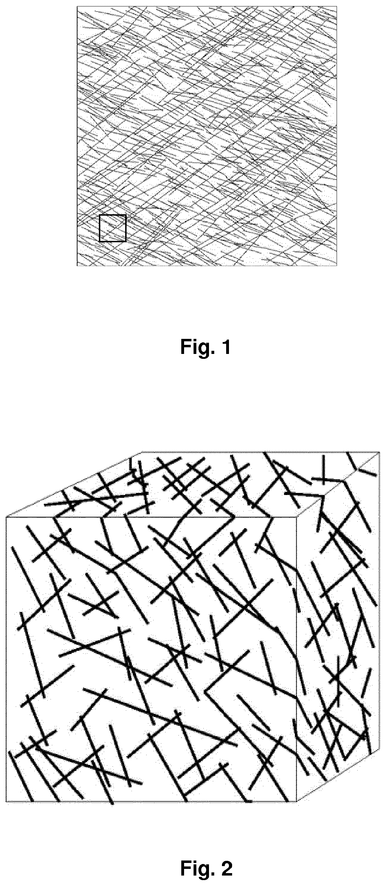

Ainsi au cours de cette sous-étape, on associe à au moins une maille donnée une représentation détaillée (DFN) de la complexité interne du réseau de fractures, aussi fidèle que possible des observations directes et indirectes du réservoir. La figure 1 présente une section horizontale prise dans une couche d'une formation, et le réseau de fractures, observable à l'échelle de la formation, pour cette section. La figure 2 présente le réseau discret de fractures visibles à l'échelle de la maille tridimensionnelle dont les limites 2D sont présentées par le carré en figure 1. Ce réseau de fractures discret constitue une image représentative du réseau réel de fractures, délimitant des blocs matriciels non fracturés, de formes et tailles irrégulières.

Pour construire un modèle de réseau de fractures discret (DFN), en au moins une maille de la représentation maillée, on peut utiliser des logiciels de modélisation, bien connus des spécialistes, tel que le logiciel FRACAFlow® (IFP Energies nouvelles, France).

**2. Caractérisation d'une représentation double milieu**

Au cours de cette étape, il s'agit de décomposer la maille considérée selon une représentation « double milieu », et de caractériser cette représentation.

Les étapes qui vont suivre sont déclinées pour une maille, qui peut être une maille de la représentation maillée ou une maille représentative d'un groupe de mailles de la représentation maillée le cas échéant (cf. étape 1.2 optionnelle). Ces étapes peuvent être répétées pour chacune des mailles de la représentation maillée, représentatives ou non.

**2.1. Décomposition selon une représentation double milieu**

Au cours de cette sous-étape, on a recours à une approche « double milieu », telle que décrite dans (Warren et Root, 1963) pour représenter de façon simplifiée la formation étudiée et notamment son réseau de fractures. Ainsi, l'approche « double milieu » consiste à simplifier le milieu contenu dans une maille en supposant que ce milieu est composé par au moins un bloc matriciel non fracturé (c'est-à-dire un bloc composé uniquement par une matrice et ne comportant pas de fractures) et par un milieu fracturé (comportant les fractures), le bloc matriciel étant délimité par lesdites fractures.

Cette représentation simplifiée d'un milieu fracturé est classiquement paramétrée par trois paramètres pour chaque maille considérée (représentative ou non) : la dimension caractéristique du bloc matriciel, le tenseur de perméabilité équivalente du bloc matriciel et le tenseur de perméabilité équivalente du milieu fracturé. A noter que le tenseur de perméabilité équivalente du bloc matriciel est supposé connu en entrée du procédé selon l'invention et correspond à la perméabilité renseignée dans chacune des mailles de la représentation maillée, obtenue par exemple après « upscaling » (« mise à l'échelle » en français) du modèle géologique. Cette étape d'upscaling est bien connue du spécialiste en ingénierie de réservoir et peut être réalisée par exemple à l'aide du logiciel CobraFlow (IFP Energies nouvelles, France).

Les sous-étapes suivantes ont pour but de déterminer le tenseur de perméabilité du milieu fracturé pour la maille considérée, ainsi que la dimension caractéristique du bloc matriciel non fracturé pour cette même maille.

### 2.2. Détermination d'un tenseur de perméabilité équivalente

Au cours de cette sous-étape, on détermine un tenseur de perméabilité équivalente du réseau de fractures pour la maille considérée. Un tenseur de perméabilité est un objet mathématique permettant de représenter une hétérogénéité spatiale de perméabilité dans une formation souterraine. En particulier dans le cas d'une formation présentant un réseau de fractures, l'écoulement des fluides est directionnel (par exemple, la perméabilité dans une formation peut être forte dans une direction et faible dans la direction perpendiculaire). On parle de tenseur de perméabilité équivalent pour indiquer que ce tenseur caractérise un comportement « moyen » vis-à-vis des écoulements. Ainsi chaque fracture d'un réseau de fractures a sa propre perméabilité et contribue à l'écoulement dans la formation souterraine. L'ensemble de ces contributions sont moyennées par une perméabilité équivalente, qui est de forme tensorielle, l'écoulement étant lui-même directionnel.

Cette sous-étape peut être effectuée à partir du modèle de réseau de fractures discret (DFN) le cas échéant (cf. étape 1.3 optionnelle), ou directement à partir des paramètres statistiques (PSF) déterminés à l'étape 1.1. Ce type de calcul des perméabilités équivalentes est bien connu des spécialistes. Ainsi, un tenseur de perméabilité représentatif des propriétés d'écoulement du réseau de fractures peut être obtenu par exemple par :

- une méthode analytique, dite "local analytical upscaling", décrite par exemple dans le document (Oda, 1985) ou encore dans la demande de brevet FR 2918179 (US 8078405). Cette méthode présente l'avantage d'être très rapide et ne nécessite pas de modèle de réseau de fractures discret (DFN). Son domaine d'application se limite, toutefois, à des réseaux de fractures bien connectés. Dans le cas contraire, des erreurs importantes sur le tenseur de perméabilité peuvent être constatées.

- une méthode numérique, dite "local numerical upscaling", décrite par exemple dans le document (Bourbiaux, et al., 1998), ou dans la demande de brevet FR 2757947 (US 6023656) pour le calcul des perméabilités équivalentes. Cette méthode est basée sur la résolution numérique des équations d'écoulement sur un maillage discret du réseau de fractures (DFN) pour différentes conditions aux limites appliquées à la colonne de mailles de calcul considéré. Le tenseur de perméabilité équivalente est obtenu par identification des rapports entre débit et perte de charge aux limites du domaine de calcul. Cette approche, plus coûteuse que la précédente, présente l'avantage de bien caractériser un réseau donné (même peu connecté). On peut par exemple utiliser la méthode numérique de calcul de propriétés équivalentes de milieux fracturés, implémentée dans le logiciel FRACAFlow® (IFP Energies nouvelles, France).

Selon un mode de mise en oeuvre de l'invention, ledit tenseur de perméabilité est déterminé en considérant des épaisseurs et des perméabilités de fractures constantes (notées $e_f$ et $k_f$ par la suite) pour l'ensemble des fractures dudit réseau de fractures de la formation considérée.

Selon un autre mode de mise en oeuvre de l'invention, ledit tenseur de perméabilité équivalente est déterminé à partir des caractéristiques du réseau de fractures dans chacune des mailles de la représentation maillée, ces caractéristiques provenant par exemple du PSF (déterminé à la sous-étape 1.1) et/ou du DFN (déterminé à la sous-étape 1.3).

### 2.3. Diagonalisation du tenseur de perméabilité équivalente du milieu fracturé

Au cours de cette sous-étape, on détermine, à partir du tenseur de perméabilité équivalente déterminé à la sous-étape précédente, les directions principales d'écoulement dans la maille considérée ainsi que les valeurs propres dudit tenseur dans les directions principales ainsi déterminées.

Selon un mode de mise en oeuvre de l'invention, cette détermination est réalisée par diagonalisation du tenseur de perméablité équivalente déterminé à la sous-étape précédente.

Selon l'invention, on obtient au cours de cette sous-étape les trois directions principales de l'écoulement, que l'on notera par la suite $dir_1$, $dir_2$ et $dir_3$, la direction $dir_1$ (respectivement $dir_2$, et $dir_3$) étant choisie de sorte que son angle avec l'axe des abscisses (respectivement l'axe des ordonnées, l'axe vertical) soit le plus faible. Et on obtient également les trois valeurs propres de ce tenseur, que l'on notera par la suite $K_1$, $K_2$, $K_3$, associées respectivement aux trois directions principales $dir_1$, $dir_2$ et $dir_3$.

**2.4.. Détermination de la dimension caractéristique de bloc matriciel**

Selon l'invention, au cours de cette sous-étape, on détermine une dimension caractérisitique du bloc matriciel pour la maille considérée.

Selon un mode de mise en oeuvre de l'invention dans lequel le tenseur de perméabilité a été déterminé en considérant des épaisseurs et des perméabilités de fractures constantes pour l'ensemble des fractures dudit réseau de fractures (cf sous-étape 2.2), on détermine une dimension caractérisitique du bloc matriciel pour la maille considérée selon une formule de la forme :

$$t^i = \left( \frac{2k_f}{\sum_{j=1}^{3}(-1)^{\delta_{ij}} K_j} - 1 \right) e_f \qquad (1)$$

où $K_j$ est la valeur propre du tenseur de perméabilité équivalente du réseau de fractures dans la maille considérée selon la direction principale $dir_j$, avec j variant de 1 à 3, ledit tenseur étant calculé à la sous-étape 2.2 et les directions principales et valeurs propres dudit tenseur étant déterminées à la sous-étape 2.3; $k_f$ et $e_f$ sont respectivement des valeurs, prédéfinies par le spécialiste, de perméabilité et d'épaisseur représentatives de l'ensemble des fractures dudit réseau de fractures ; et $t^i$ est la dimension caractéristique dudit bloc matriciel dans ladite direction principale d'écoulement $dir_i$, i variant de 1 à 3. Selon un mode de mise en oeuvre de l'invention, on utilise $k_f = 100mD$ et $e_f = 0.001m$. Selon ce dernier mode de mise en oeuvre de l'invention, dans lequel on suppose en outre que les tailles de blocs sont sensiblement supérieures aux épaisseurs des fractures, la formule déclinée en (1) peut être simplifiée selon une formule du type (avec les notations décrites précédemment) :

$$t^i = \left( \frac{2k_f e_f}{\sum_{j=1}^{3}(-1)^{\delta_{ij}} K_j} \right) , \qquad (2)$$

Selon un mode de mise en oeuvre de l'invention, on détermine une dimension caractérisitique du bloc matriciel selon une relation fonction d'au moins les valeurs propres du tenseur de perméabilité équivalente du milieu fracturé calculé à l'étape 2.2 et d'un tenseur de perméabilité surfacique équivalente du milieu fracturé. Selon un mode de mise en euvre de l'invention, on calcule ledit tenseur de perméabilité surfacique équivalente selon au moins les étapes suivantes :

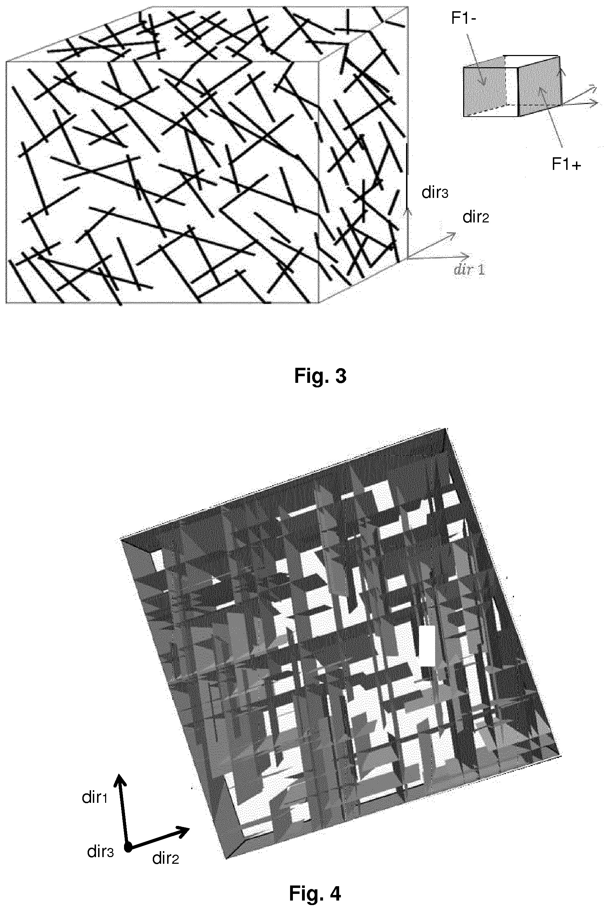

- on réoriente la maille considérée selon les directions principales d'écoulement (calculées à l'étape 2.3). La figure 3 est une illustration de cette étape, une maille (partie gauche de la figure 3) étant réorientée selon les directions principales d'écoulement $dir_1$, $dir_2$, $dir_3$ ;

- pour chaque direction principale d'écoulement, on détermine le flux dudit fluide sortant des traces de fractures présentes sur les faces (de ladite maille réorientée) perpendiculaires à la direction principale considérée. Les faces F1+ et F1-, perpendiculaires à la direction $dir_1$, sont par exemple présentées en grisé en figure 3 (partie droite de la figure 3). Selon un mode de mise en oeuvre de l'invention, la maille réorientée est construite de manière à ce que les surfaces des faces Fi+ et Fi- soient identiques ;

- pour chaque direction principale d'écoulement, on détermine ladite perméabilité surfacique équivalente dans la direction considérée par équivalence dudit flux avec un flux représentatif d'un milieu homogène.

Selon ce dernier mode de réalisation, on aboutit à une perméabilité surfacique équivalente $K_i^S$ dans la direction principale $dir_i$ (avec i variant de 1 à 3) qui peut s'exprimer selon une formule du type :

$$K_i^S = \frac{1}{2S_i} \sum_{f=0..nbfr(i)} k_f^i l_f^i e_f^i \qquad (4)$$

où nbfr(i) est le nombre fractures intersectant les faces Fi+ et Fi-, $k_f^i$, $l_f^i$, et $e_f^i$ sont respectivement leur perméabilité, leur longueur et leur ouverture sur la face i, $S_i$ est la surface moyenne des faces Fi+ et Fi-. Dans le cas où le tenseur de perméabilité a été déterminé en considérant des épaisseurs et des perméabilités de fractures constantes pour l'ensemble des fractures du réseau de fractures (cf sous-étape 2.2), on aboutit à une perméabilité surfacique équivalente $K_i^S$ dans la direction principale dir$_i$ (avec i variant de 1 à 3) qui peut s'exprimer selon une formule du type :

$$K_i^S = \frac{k_f \, e_f}{2S_i} \sum_{f=0..nbfr(i)} l_f^i \qquad (4')$$

où nbfr(i) est le nombre fractures intersectant les faces Fi+ et Fi-, $l_f^i$ est leur longueur sur la face i, $S_i$ est la surface moyenne des faces Fi+ et Fi-, $k_f$ et $e_f$ sont respectivement des valeurs, prédéfinies par le spécialiste, de perméabilité et d'épaisseur représentatives de l'ensemble des fractures dudit réseau de fractures. Selon un mode de mise en oeuvre de l'invention, on utilise $k_f$ = 100$mD$ et $e_f$ = 0.001m.

Selon un mode de mise en oeuvre de l'invention, la dimension caractéristique du bloc matriciel de la maille considérée dans la direction dir$_i$ (avec i variant de 1 à 3) est déterminée selon une formule du type (avec les notations décrites précédemment) :

$$t^i = \left( (\Phi - P_{21}^i)^{-1} \frac{\sum_{j=1}^3 \left( (-1)^{\delta_{ij}} K_j^S \right)}{\sum_{j=1}^3 (-1)^{\delta_{ij}} K_j} - 1 \right) \qquad (5)$$

où $\Phi$ est la porosité des fractures présentes dans la maille considérée, $P_{21}^i$ est le rapport moyen entre la surface de fractures sur les faces de la maille perpendiculaires à la direction principale dir$_i$ et la surface desdites faces. Selon un mode de mise en oeuvre de l'invention, le rapport $P_{21}^i$ peut s'exprimer (avec les notations décrites précédemment) selon une formule du type :

$$P_{21}^i = \frac{1}{2S_i} \sum_{f=0..nbfr(i)} e_f^i l_f^i \qquad (6)$$

Dans le cas où le tenseur de perméabilité a été déterminé en considérant des épaisseurs et des perméabilités de fractures constantes pour l'ensemble des fractures du réseau de fractures (cf sous-étape 2.2), la formule (6) peut se simplifier de la façon suivante :

$$P_{21}^i = \frac{e_f}{2S_i} \sum_{f=0..nbfr(i)} l_f^i \qquad (6')$$

### 2.5. Contrôle qualité

Cette sous-étape est optionnelle et consiste à déterminer au moins un critère permettant d'évaluer s'il est acceptable de représenter une maille donnée par plusieurs blocs matriciels de même dimension caractéristique.
Selon un premier mode de mise en oeuvre de l'invention, on détermine un paramètre géométrique $E_{geom}$ selon une formule du type (avec les notations décrites à la sous-étape précédente) :

$$E_{geom} = \frac{\Phi - \frac{1}{2}\sum P_{21}^i}{\Phi}$$

Ainsi, plus le réseau de fractures dans la maille considérée est homogène, plus l'erreur $E_{geom}$ est faible, et donc plus il est justifié de décomposer une maille donnée par des blocs matriciels de même dimension caractéristique. Selon un mode de mise en oeuvre de l'invention, on considère un critère indiquant qu'il est nécessaire de déterminer au moins deux dimensions de bloc matriciel pour la maille considérée lorsque le paramètre géométrique $E_{geom}$ est supérieur à une valeur prédéfinie par le spécialiste, par exemple lorsque $E_{geom}$ est supérieur à 50%.

Selon autre un mode de mise en oeuvre de l'invention, on détermine un paramètre dynamique $E_{dyn}^i$ pour une direction principale dir$_i$ donnée (avec i variant de 1 à 3) selon une formule (avec les notations décrites à la sous-étape précédente) du type :

$$E_{dyn}^i = \frac{\sum_{j=1}^{3}(-1)^{\delta_{ij}}K_j \quad - \quad k_f \sum_{j=0}^{3}\left((-1)^{\delta_{ij}}P_{21}^j\right)}{\sum_{j=0}^{3}(-1)^{\delta_{ij}}K_j}$$

Ainsi, plus le réseau dans la maille considérée est homogène, plus l'erreur $E_{dyn}^i$ est faible, et donc plus il est justifié de décomposer une maille donnée par des blocs matriciels de même dimension caractéristique. Selon un mode de mise en oeuvre de l'invention, on considère qu'il est nécessaire de déterminer au moins deux dimensions de bloc matriciel pour la maille considérée lorsque le paramètre dynamique $E_{dyn}^i$ est supérieur à une valeur prédéfinie par le spécialiste, par exemple $E_{dyn}^i$ est supérieur à 50% pour au moins une des directions principales d'écoulement (dir$_i$ ,avec i variant de 1 à 3), pour au moins deux directions, ou bien pour les trois directions.

Selon un mode de mise en oeuvre de l'invention dans lequel un critère permettant d'évaluer la pertinence de ne représenter une maille donnée que par des blocs matriciels de même dimension n'est pas vérifié (par exemple si au moins le paramètre géométrique $E_{geom}$ ou le paramètre dynamique $E_{dyn}^i$ a une valeur supérieure à une valeur acceptable prédéfinie par le spécialiste), on peut mettre en oeuvre le procédé décrit dans le brevet FR 2923930 (US 8688424) pour la maille considérée. Ce procédé permet de calculer une taille de bloc matriciel, représentative des blocs de roche non fracturés, à partir d'un modèle de réseau de fractures discret, d'une analyse d'image et de l'interpolation d'une courbe d'invasion.

Les étapes 2.1 à 2.4 (et éventuellement 2.5) peuvent être répétées pour chacune des mailles de la représentation maillée de la formation considérée ou pour chacune des mailles représentatives des groupes de mailles de la représentation maillée le cas échéant (cf. étape 1.2 optionnelle). Avantageusement, lorsque les étapes 2.1 à 2.4 (et éventuellement 2.5) sont réalisées pour une maille représentative d'un groupe de mailles, on attribue aux mailles dudit groupe de mailles le tenseur de perméabilité équivalente et/ou la dimension caractéristique de bloc matriciel déterminés pour la maille représentative considérée. De cette manière, le calcul du tenseur de perméabilité équivalente et/ou de la dimension caractéristique étant limité aux mailles représentatives, un gain en temps de calcul est obtenu.

### 3. Schéma d'exploitation optimal du fluide de la formation

Au cours de cette étape, il s'agit de définir au moins un schéma d'exploitation optimal du fluide contenu dans la formation, c'est-à-dire un schéma d'exploitation permettant une exploitation optimale d'un fluide considéré suivant des critères technico-économiques prédéfinis par le spécialiste. Il peut s'agir d'un scénario offrant un fort taux de récupération du fluide, sur une longue durée d'exploitation, et nécessitant un nombre de puits limité. Puis, selon l'invention, on exploite le fluide de la formation étudiée en fonction de ce schéma d'exploitation optimal.

Selon l'invention, la détermination du schéma d'exploitation est réalisée à l'aide d'une simulation d'écoulement exploitant au moins la représentation maillée de la formation étudiée, la dimension caractéristique de bloc matriciel calculée à la sous-étape 2.4 et un tenseur de perméabilité équivalente du réseau de fractures, quantités déterminées pour au moins une maille de la représentation maillée. Selon un mode de mise en oeuvre de l'invention, le tenseur de perméabilité équivalente utilisé pour la simulation d'écoulement est déterminé à partir des caractéristiques du réseau de fractures dans chacune des mailles de la représentation maillée (cf sous-étape 2.2). Avantageusement, les quantités requises pour la simulation d'écoulement ont été déterminées pour chaque maille de la représentation maillée, ou pour au moins chaque maille représentative de groupes de mailles de la représentation maillée. Dans ce dernier cas, les valeurs déterminées pour une maille représentative donnée sont avantageusement attribuées à toutes les mailles dudit groupe.

Selon un mode de mise en oeuvre de l'invention, on a recours pour cette étape à une simulation d'écoulement basée sur une approche « double milieu ». Pour ce type de simulation d'écoulement, l'écoulement des fluides s'effectue à travers les fractures pour l'essentiel, et des échanges de fluides interviennent localement entre les fractures et les blocs matriciels (échange matrice-fissure). Un exemple de simulateur d'écoulement double milieu est le logiciel Puma-Flow (IFP Energies nouvelles, France).

Selon l'invention, à tout instant t de la simulation, le simulateur d'écoulement résout l'ensemble des équations d'écoulement propres à chaque maille et délivre des valeurs solutions des inconnues (saturations, pressions, concentrations, température,...) prédites à cet instant t. De cette résolution, découle la connaissance des quantités d'huile produites et de l'état du gisement (distribution des pressions, saturations, etc...) à l'instant considéré. A partir d'un scénario d'exploitation donnée, de la représentation double milieu du gisement, et de la formule reliant le flux d'échange de masse et/ou d'énergie à la différence de potentiel matrice-fracture, on est alors capable de simuler la production d'hydrocarbures escomptée, au moyen du simulateur d'écoulement dit à double milieu.

La définition d'un schéma d'exploitation du fluide de la formation étudiée peut consister à choisir un type de procédé de récupération (par exemple un procédé de récupération par injection d'eau) puis à déterminer, pour ce type de procédé, le nombre, la géométrie et l'implantation (position et espacement) des puits injecteurs et producteurs afin de tenir compte au mieux de l'impact des fractures sur la progression des fluides au sein du réservoir. Afin de définir un schéma d'exploitation optimal, différents essais de différents scenarii de production peuvent être réalisés à l'aide d'un simulateur d'écoulement. Le schéma d'exploitation offrant le meilleur taux de récupération de fluide pour un coût le plus faible sera par exemple préféré.

En sélectionnant divers scénarios, caractérisés par exemple par diverses implantations respectives des puits injecteurs et producteurs, et en simulant la production de fluide pour chacun d'eux, on peut sélectionner le scénario permettant d'optimiser la production de la formation considérée suivant des critères technico-économiques prédéfinis par le spécialiste.

Les spécialistes exploitent alors le fluide de la formation considérée selon le scénario permettant d'optimiser la production du gisement, notamment en forant les puits injecteurs et producteurs définis par ledit schéma d'exploitation optimal, et à produire le fluide selon le procédé de récupération défini par ledit schéma d'exploitation optimal.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des caractéristiques précédentes, lorsque ledit programme est exécuté sur un ordinateur.

**Exemple d'application**

Les caractéristiques et avantages du procédé selon l'invention apparaîtront plus clairement à la lecture des exemples d'application ci-après.

La présente invention a été appliquée à une formation souterraine composée de 10 couches. La représentation maillée de cette formation est constituée de 1 050 000 mailles ($350 \times 300 \times 10$).

Dans un premier exemple, on considère que la formation souterraine est caractérisée par deux familles de fractures :

- une première famille, présentant un espacement entre fractures de 5m, les fractures de cette famille ayant une longueur moyenne de 20m et une orientation moyenne de 10°;

- une seconde famille, présentant un espacement entre fractures de 3m, les fractures de cette famille ayant une longueur moyenne de 45m et une orientation moyenne de 100°.

La figure 4 présente à titre illustratif la répartition de ces deux familles de fractures dans ladite formation. On peut notamment observer sur cette figure que les deux familles de fractures sont sensiblement orthogonales entre elles. Cette figure présente notamment les directions principales d'écoulement $dir_1$ et $dir_2$, qui sont sensiblement parallèles aux orientations de ces deux familles de fractures.

A des fins de comparaison, on détermine une dimension caractéristique de bloc matriciel selon deux méthodes de l'art antérieur (méthode de pixellisation et méthode par tirage de rayons décrite précédemment) et selon le procédé selon l'invention.

Les temps de calculs pour chacune de ces méthodes, appliquées à l'ensemble des mailles de la représentation maillée, sont donnés dans le tableau 1. On peut notamment remarquer que les temps de calcul obtenus par le procédé selon l'invention (colonne 3) sont très largement inférieurs à ceux obtenus par la méthode de pixellisation (colonne 1), et même à ceux obtenus par la méthode par tirage de rayons (colonne 2).

Tableau 1

| Pixellisation | Tirage de rayons | Invention |
|---|---|---|
| >> 50 jours | 1123s | 236s |

Les valeurs des dimensions caractéristiques de bloc matriciel obtenues pour chacune de ces trois méthodes sont par ailleurs indiquées dans le tableau 2. On peut observer que la méthode de pixellisation (colonne 2) permet une bonne approximation des tailles de blocs matriciels mais reste la plus éloignée des véritables tailles (9.6m au lieu de 5m dans la direction 1, et 4.2m au lieu de 3m dans la direction 2). La méthode par tirage de rayons (colonne 3) offre une bonne approximation des dimensions attendues, mais de façon générale, présente le désavantage d'être dépendante de la position des rayons et du nombre de rayons utilisés. La dimension caractéristique de bloc matriciel obtenue par le procédé selon l'invention (colonne 4) est la plus proche de la réalité, et ce, quelle que soit la direction d'écoulement considérée.

Tableau 2

| Dimension caractéristique (m) | Pixellisation | Tirage de rayons | Invention |
|---|---|---|---|
| direction 1 | 9.6 | 3 | 5 |
| direction 2 | 4.2 | 3.2 | 3.9 |

Dans un second exemple (non représenté), on considère que la première famille de fractures a une orientation moyenne de 70°. Les fractures du modèle de fractures simplifié vont donc tendre à être toutes orientées dans la direction d'écoulement $dir_1$. Ceci devrait se traduire par une augmentation de la taille de bloc matriciel dans la direction $dir_1$ et une diminution de la taille de bloc dans la direction $dir_2$ (on interceptera plus de fractures dans cette direction). Ce comportement est mieux capturé par le procédé selon l'invention (colonne 4 du tableau 3) que par la méthode par tirage de rayons (colonne 3 du tableau 3), et que par la méthode par pixellisation (colonne 2 du tableau 3). En outre, le procédé selon l'invention présente l'avantage d'être indépendant de la position et de la densité de rayons tirés, et capture mieux les effets de connectivité du réseau.

Tableau 3

| Dimension caractéristique (m) | Pixellisation | Tirage de rayons | Invention |
|---|---|---|---|
| direction 1 | 9.6 | 8.3 | 33 |
| direction 2 | 4.5 | 2.5 | 2.2 |

Ainsi, le procédé selon l'invention permet notamment de déterminer une dimension caractéristique de bloc matriciel relativement précise, et ce, en des temps de calculs raisonnables, rendant le procédé applicable en routine. De plus, le procédé selon l'invention ne requiert pas nécessairement de calculer un modèle de réseau de fractures discret. En outre, le procédé selon l'invention ne nécessite pas d'hypothèse 2D (avec une application couche après couche notamment), ce qui le rend applicable à des réseaux de fractures tridimensionnels. Les dimensions caractéristiques de bloc matriciel ainsi déterminées par le procédé selon l'invention peuvent être alors intégrées dans un procédé plus général d'exploitation d'un fluide d'une formation souterraine, incluant au moins une étape de simulation d'écoulement.

**Revendications**

1.  Procédé pour l'exploitation d'un fluide au sein d'une formation souterraine traversée par un réseau de fractures, dans lequel, à partir de mesures de propriétés relatives à ladite formation, on construit une représentation maillée de ladite formation et on détermine des paramètres statistiques relatifs audit réseau de fractures, **caractérisé en ce qu'**on réalise au moins les étapes suivantes pour au moins une maille de ladite représentation maillée :

    A. on décompose ladite maille en au moins un bloc matriciel, le dit bloc matriciel représentant une portion de ladite formation non fracturée, ledit bloc étant délimité par des fractures dudit réseau de fractures présentes dans ladite maille ;
    B. on détermine un tenseur de perméabilité équivalente du réseau de fractures dans ladite maille ;
    C. on détermine les directions principales d'écoulement et les valeurs propres dudit tenseur de perméabilité équivalente selon lesdites directions ;
    D. on détermine une dimension caractéristique dudit bloc matriciel selon une relation fonction au moins desdites valeurs propres dudit tenseur de perméabilité ;

et **en ce que**, à partir d'au moins ladite représentation maillée, de ladite dimension caractéristique dudit bloc matriciel et d'un simulateur d'écoulement, on définit un schéma d'exploitation optimal dudit fluide de ladite formation et on exploite ledit fluide de ladite formation en fonction dudit schéma d'exploitation optimal.

2. Procédé selon l'une des revendications précédentes, dans lequel lesdits paramètres statistiques sont choisis parmi les paramètres suivants : densité de fractures, longueur de fractures, orientation des fractures dans l'espace, ouverture de fractures, et distribution de fractures au sein de ladite formation.

3. Procédé l'une des revendications précédentes, dans lequel, on détermine ledit tenseur de perméabilité équivalente pour ladite maille en construisant préalablement un modèle de de réseau de fractures discret pour ladite maille.

4. Procédé selon l'une des revendications précédentes, dans lequel ladite dimension caractéristique dudit bloc matriciel de ladite maille est déterminée selon une formule de la forme :

$$ t^i = \left( \frac{2 k_f e_f}{\sum_{j=1}^{3} (-1)^{\delta_{ij}} K_j} \right) \; , $$

où $K_j$ est ladite valeur propre dudit tenseur de perméabilité équivalente selon ladite direction principale j, avec j variant de 1 à 3, $k_f$ et $e_f$ sont respectivement des valeurs prédéterminées de perméabilité et d'épaisseur représentatives de l'ensemble des fractures dudit réseau de fractures, et $t^i$ est ladite dimension caractéristique dudit bloc matriciel dans ladite direction principale d'écoulement i, i pouvant varier de 1 à 3.

5. Procédé selon l'une des revendications 1 à 3, dans lequel ladite dimension caractéristique dudit bloc matriciel de ladite maille est déterminée selon une formule de la forme :

$$ t^i = \left( \frac{2 k_f}{\sum_{j=1}^{3} (-1)^{\delta_{ij}} K_j} - 1 \right) e_f \quad , $$

où $K_j$ est ladite valeur propre dudit tenseur de perméabilité équivalente selon ladite direction principale j, avec j variant de 1 à 3, $k_f$ et $e_f$ sont respectivement des valeurs prédéterminées de perméabilité et d'épaisseur représentatives de l'ensemble des fractures dudit réseau de fractures, et $t^i$ est ladite dimension caractéristique dudit bloc matriciel dans ladite direction principale d'écoulement i, i pouvant varier de 1 à 3.

6. Procédé selon l'une des revendications 1 à 3, dans lequel ladite dimension caractéristique dudit bloc matriciel de ladite maille est déterminée selon une relation fonction d'au moins lesdites valeurs propres dudit tenseur de perméabilité équivalente et d'un tenseur de perméabilité surfacique équivalente, ledit tenseur de perméabilité surfacique équivalente étant déterminé selon au moins les étapes suivantes :

- on réoriente ladite maille selon lesdites directions principales d'écoulement ;
- pour chaque direction principale d'écoulement, on détermine le flux dudit fluide sortant des traces de fractures présentes sur les faces de ladite maille réorientée perpendiculaires à ladite direction principale ;
- pour chaque direction principale d'écoulement, on détermine ladite perméabilité surfacique équivalente dans ladite direction par équivalence dudit flux avec un flux représentatif d'un milieu homogène.

7. Procédé selon l'une des revendications précédentes, dans lequel on détermine en outre un critère d'acceptabilité de la représentation de ladite maille par une pluralité de blocs matriciels de même dimension caractéristique.

8. Procédé selon l'une des revendications précédentes, dans lequel ladite maille, pour laquelle on réalise les étapes A) à D), est une maille représentative d'un groupe de mailles de ladite représentation maillée, ledit groupe de mailles étant déterminé par exemple à partir d'au moins ledit paramètre statistique, et dans lequel, à l'étape D), on attribue ladite dimension caractéristique auxdits blocs matriciels desdites mailles dudit groupe.

9. Procédé selon l'une des revendications précédentes, dans lequel ledit schéma d'exploitation optimal est défini en déterminant un procédé de récupération dudit fluide, ainsi qu'un nombre, une implantation et une géométrie de puits injecteurs et/ou producteurs permettant de satisfaire des critères technico-économiques prédéfinis.

**10.** Procédé selon la revendication 9, dans lequel ladite exploitation dudit fluide en fonction dudit schéma d'exploitation optimal consiste au moins à forer lesdits puits injecteurs et/ou producteurs et à produire ledit fluide selon ledit procédé de récupération.

**11.** Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

Fig. 1

Fig. 2

**Fig. 3**

**Fig. 4**

Europäisches
Patentamt

European
Patent Office

Office européen
des brevets

**RAPPORT DE RECHERCHE EUROPEENNE**

Numéro de la demande

EP 16 30 6491

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 453 106 A1 (IFP ENERGIES NOUVELLES [FR]) 16 mai 2012 (2012-05-16) | 1-3,6-11 | INV. E21B43/00 G01V11/00 E21B41/00 |
| A | * abrégé *<br>* figures 1-5 *<br>* alinéa [0005] - alinéa [0006] *<br>* alinéa [0008] - alinéa [0009] *<br>* alinéa [0013] - alinéa [0015] *<br>* alinéa [0029] - alinéa [0030] *<br>* alinéa [0037] - alinéa [0039] *<br>* alinéa [0046] - alinéa [0050] *<br>* alinéa [0063] - alinéa [0068] *<br>----- | 4,5 | |
| X | EP 2 530 493 A1 (IFP ENERGIES NOUVELLES [FR]) 5 décembre 2012 (2012-12-05) | 1-3,6-11 | |
| A | * abrégé *<br>* figures 1-7 *<br>* alinéa [0053] - alinéa [0059] *<br>* alinéa [0027] - alinéa [0035] *<br>----- | 4,5 | |
| A | US 2014/372095 A1 (VAN DER ZEE WOUTER E [NL] ET AL) 18 décembre 2014 (2014-12-18)<br>* abrégé *<br>* figures 1-6 *<br>* alinéa [0011] - alinéa [0012] *<br>* alinéa [0020] - alinéa [0025] *<br>* alinéa [0038] - alinéa [0045] *<br>* alinéa [0050] - alinéa [0053] *<br>----- | 1-11 | |

DOMAINES TECHNIQUES RECHERCHES (IPC)

G01V
E21B
G06F

Le présent rapport a été établi pour toutes les revendications

| Lieu de la recherche | Date d'achèvement de la recherche | Examinateur |
|---|---|---|
| La Haye | 20 avril 2017 | Hustedt, Bernhard |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 30 6491

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-04-2017

| Document brevet cité au rapport de recherche | Date de publication | Membre(s) de la famille de brevet(s) | Date de publication |
|---|---|---|---|
| EP 2453106 A1 | 16-05-2012 | EP 2453106 A1<br>FR 2967200 A1<br>US 2012116740 A1 | 16-05-2012<br>11-05-2012<br>10-05-2012 |
| EP 2530493 A1 | 05-12-2012 | EP 2530493 A1<br>FR 2976099 A1<br>US 2013138406 A1 | 05-12-2012<br>07-12-2012<br>30-05-2013 |
| US 2014372095 A1 | 18-12-2014 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2757957
- US 6064944 A
- FR 2923930
- US 8688424 B
- FR 2918179
- US 8078405 B
- FR 2757947
- US 6023656 A

**Littérature non-brevet citée dans la description**

- **BOURBIAUX, B. ; CACAS, M. C. ; SARDA, S. ; SABATHIER J. C.** A Rapid and Efficient Methodology to Convert Fractured Reservoir Images into a Dual-Porosity Model. *Oil & Gas Science and Technology,* Novembre 1998, vol. 53 (6), 785-799
- **ODA, M.** Permeability tensor for discontinuous Rock Masses. *Geotechnique,* 1985, vol. 35 (4), 483-495
- **WARREN, J.E. ; ROOT, P.J.** The Behavior of Naturally Fractured Reservoirs. *SPE Journal,* Septembre 1963, 245-255